# EUROPEAN PATENT APPLICATION

(11) **EP 2 608 300 A1**
(43) Date of publication of application: **26.06.2013**
(21) Application number: 11194913.7
(22) Date of filing: 21.12.2011
(51) Int. Cl.: H01M 8/02, H01M 8/24

(54) **End plate assembly for a fuel cell stack**

(71) Applicant: Belenos Clean Power Holding AG, 2502 Bienne (CH)
(72) Inventor: Hannesen, Uwe, 3054 Schüpfen (CH); Hofer, Marcel, 5612 Villmergen (CH); Huggenberger, Stefan, 5223 Rinniken (CH); Misselwitz, Eric, 8143 Stallikon (CH); Fuchs, Marc, 9248 Bichwil (CH); Jaeger, Peter, 9495 Triesen (LI)
(74) Representative: Ravenel, Thierry Gérard Louis

(57) **Abstract**

The present invention relates to an end plate assembly for a fuel cell stack, comprising:
- a carrier structure (12) to provide mechanical load transmission, and
- at least one insulating structure (14) at least partially covering a front side (42) of the carrier structure (12) to face towards at least one fuel cell (1),
wherein the insulating structure (14) and the carrier structure (12) are inseparably engaged.

## Description

### Field of the Invention

The present invention relates to fuel cell design and in particular to an end plate assembly of a housing adapted to receive a plurality of fuel cells stacked on one another.

### Background and Prior Art

By means of electrochemical fuel cells, reactants, like a stream of hydrogen and a stream of oxygen can be converted into electric power and water. For example with polymer electrolyte fuel cell designs, an electrolyte membrane is typically interposed between an anode and a cathode to form a membrane electrode assembly (MEA). Since a single fuel cell only provides a rather limited maximum voltage, a pre-determined number of fuel cells are typically stacked on one another or next to each other to form a fuel cell stack, wherein adjacently disposed fuel cells are electrically contacted in series.

With proton exchange membrane fuel cells (PEMFC) but also with other fuel cell designs when making use of gaseous reactants it is necessary to precisely control the gas flow within the stack. In order to provide a gas tight sealing, a fuel cell stack sufficiently equipped with sealing elements is typically compressed along the stacking direction, e.g. by way of two end plates arranged at opposite ends of the fuel cell stack that are directly interconnected with each other, e.g. by way of tension bolts.

From document US 2010/0143765 A1 a fuel cell stack including first and second end plates is known. There, the first end plate includes a first end plate structure component, which is combined with a first end plate manifold component. Similarly, also the second end plate includes a second end plate structure component combined with a second end plate manifold component. First and second end plate manifold components are placed between the first and the second end plate structure components, while the fuel cell is disposed between the first and the second end plate manifold components. Furthermore, the material of the first end plate structure component or the second end plate structure component is selected from a group consisting of ferrous alloy, aluminium alloy, titanium alloy and stainless steel while the material of the end plate manifold components is a polymer material.

Upon assembly of the fuel cell, first and second end plate structure components have to be individually assembled with corresponding first and second end plate manifold components. Such individual assembly steps are time- and cost intensive and require separate manufacturing of the end plate structure component and the corresponding end plate manifold component with high precision and with a high degree of reproducibility.

It is therefore an object of the present invention to provide an end plate assembly for a fuel cell stack providing a time- and cost-efficient assembly and manufacture of a fuel cell device. Furthermore, the invention should provide an end plate assembly providing a high degree of dimensional accuracy and a large degree of reproducibility, which is particularly suitable for a mass production or mass manufacturing process.

### Summary of the Invention

The present invention therefore provides an end plate assembly for a fuel cell stack or for a fuel cell device, wherein the end plate assembly comprises a carrier structure to provide mechanical load transmission across the end plate and further comprises at least one insulting structure at least partially covering a front side of the carrier structure that faces towards at least one fuel cell. The at least one insulating structure and the carrier structure are inseparably engaged with each other to inhibit separation of the insulating structure and the carrier structure, e.g. prior to become assembled in a fuel cell device. Mutual and direct interconnection of carrier structure and insulating structure is generally attainable without any additional fastening or fixing means. By way of the mutual, direct and inseparable engagement of the insulating structure and the carrier structure, a preassembled end plate assembly can be provided, which in its entirety is to be handled and assembled with further components of a fuel cell device and/or of its housing.

In the present context, with an inseparable engagement it is meant that the carrier structure and the insulating structure cannot be separated from each other in a non-destructive way but only in a brute-force manner. Hence, the carrier structure and the insulating structure are non-detachably and permanently or inextricably interconnected.

According to a preferred embodiment, the insulating structure and the carrier structure are positively engaged, wherein the positive engagement is attainable only by the mutually corresponding geometrical structures of the insulating structure and the carrier structure. It is generally conceivable, that the insulating structure is formed and produced at least partially around the carrier structure in order to inherently provide a positive interlock of the insulating structure and the carrier structure. Alternatively, it is also conceivable, that the insulating structure and/or the carrier structure comprise mutually corresponding positive engaging fastening means, such like catching- and/or detent-like protrusions and recesses.

According to another preferred embodiment, the insulating structure and the carrier structure are at least partially mutually bonded. The carrier structure and the insulating structure may be adhesively joined, e.g. by making use of suitable adhesive materials or by connectively molding the insulating structure to the carrier structure.

In a further preferred embodiment, the insulating structure and the carrier structure form a composite end plate composed of at least two structures that are preferably made of different materials or material types.

In another preferred aspect, the insulating structure substantially covers the entire front side of the carrier structure. This way, the insulating structure provides electrical insulation between the carrier structure and electrically conductive components of adjacently disposed fuel cells. Moreover, the insulating structure not only provides electrical insulation but may also provide a hermetic seal for the carrier structure in view of reactants that have to be guided through the carrier structure, and which, when getting in contact with such reactant materials may otherwise become subject to corrosion or similar degradation defects.

The front side of the carrier structure typically faces towards the fuel cells of the fuel cell device and hence inwardly. In a typical fuel cell device, two end plate assemblies are provided, wherein the carrier structures face towards each other with their front side and having respective insulating structures disposed therebetween.

It is of further benefit and according to another embodiment, when the insulating structure comprises a recess at or in a front side which is adapted to receive a current collector of the fuel cell stack. The front side of the insulating structure typically faces away from the carrier structure, while the backside of the insulating structure faces towards the front side of the carrier structure. By providing a recess at a front side of the insulating structure, to receive a current collector plate, the end plate assembly and in particular its insulating structure may inherently provide a mechanical fastening means for the current collector plate when the fuel cell device is finally assembled.

Accordingly, the insulating structure may comprise at least one or several recesses adapted to receive one or more sealing elements, like O-rings of polymeric, preferably of elastomeric material in order to facilitate the arrangement and assembly of sealing elements.

In a further preferred embodiment, the insulating structure comprises at least one hollow protrusion extending through a corresponding through opening of the carrier structure. By means of the hollow protrusion, the insulating structure at least partially intersects the carrier structure and provides a liquid-tight feed-through or lead-through across the carrier structure. The hollow protrusion may therefore serve as a guiding channel for liquid or gaseous reactants and/or for a coolant. By way of intersecting the carrier structure with a hollow protrusion, a mutual engagement and fastening of insulating structure and carrier structure may be at least supported.

In a further preferred embodiment, the hollow protrusion comprises a radially widened rim at its free end, which is or gets in abutment with the backside of the carrier structure, typically facing away from the insulating structure. The radially widened rim of the hollow protrusion of the insulating structure is substantially wider than the inner diameter of a through opening of the carrier structure. The rim of the hollow protrusion may be widened manually after the hollow protrusion has been inserted into and through the through opening. Preferably, the radially widened rim is generated during formation of the insulating structure, in particular by way of molding.

According to a further preferred embodiment, the insulating structure comprises at least one lateral extension that extends substantially parallel to a surface normal of the insulating structure. Moreover, the lateral extension mates with a lateral recess of the carrier structure and does therefore not reach through a circumferentially closed through opening but somehow bypasses the carrier structure. The lateral extension may provide an axially extending insulating piece being integrally formed with the planar structure of the insulating structure. It may serve as an insulating means for a conductive structure electrically or conductively coupled with the current collector plate. Therefore, the lateral extension may laterally or radially merge into the recess of the insulating structure which is adapted to receive and/or to fix the current collector plate.

In a further preferred aspect, the insulating structure comprises an injection moldable plastic material. Preferably, the insulating structure comprises a thermoplastic material, such like polypropylene (PP), polyoxymethylene (POM) or comparable heat resistant plastic or polymeric material.

In a further preferred embodiment, the carrier structure comprises a cast metal part. The cast metal part may comprise a single metal or various metal component, e.g. in form of various metal alloys. The carrier structure may comprise such metals like aluminum, steel, titanium or various alloys thereof.

In a further preferred aspect, the carrier structure, preferably made of metal serves to provide as a component of an injection molding tool. In particular, the carrier structure may provide a proofing form, which in cooperation with another injection tool component constitutes an injection molding tool by way of which the insulating structure can be geometrically formed and interconnected with the carrier structure by way of injection molding.

In a further preferred embodiment, the carrier structure is substantially free of undercuts in order to support and to enable a mutual engagement of the carrier structure and the insulating structure by way of an injection molding process.

It is of particular benefit and according to a further preferred embodiment, when the carrier structure is at least partially overmolded by the insulating structure at a front side portion and at a backside portion. Hence, the insulating structure extends at the front side as well as at the backside of the carrier structure with respective front side and backside portions, which are integrally formed by way of the injection molding or overmolding process. The radially widened rims of the hollow protrusions of the insulating structure may constitute such backside portions.

In a further preferred but independent aspect, also a fuel cell assembly is provided comprising at least one fuel cell or a stack of fuel cells and further comprises at least one end plate assembly as described above.

Moreover and according to another independent aspect, also a method to manufacture an end plate assembly as described above is provided. There, a carrier structure, typically provided in form of a cast metal part is at least partially overmolded by an injection moldable material to form an insulating structure inseparably engaged with the carrier structure. This way, a composite end plate assembly composed of carrier structure and insulating structure can be provided in a single step of overmolding the carrier structure with an electrically insulating injection moldable plastic or polymeric material. This way, general handling and assembly of a fuel cell device can be optimized and facilitated.

### Brief Description of the Drawings

In the following, preferred embodiments of the invention will be described by making reference to the drawings in which:
Fig. 1 shows a perspective exploded illustration of the end plate assembly as seen from the front side and
Fig. 2 shows a corresponding illustration of the end plate assembly according to Fig. 1 as seen from the backside.

### Detailed Description

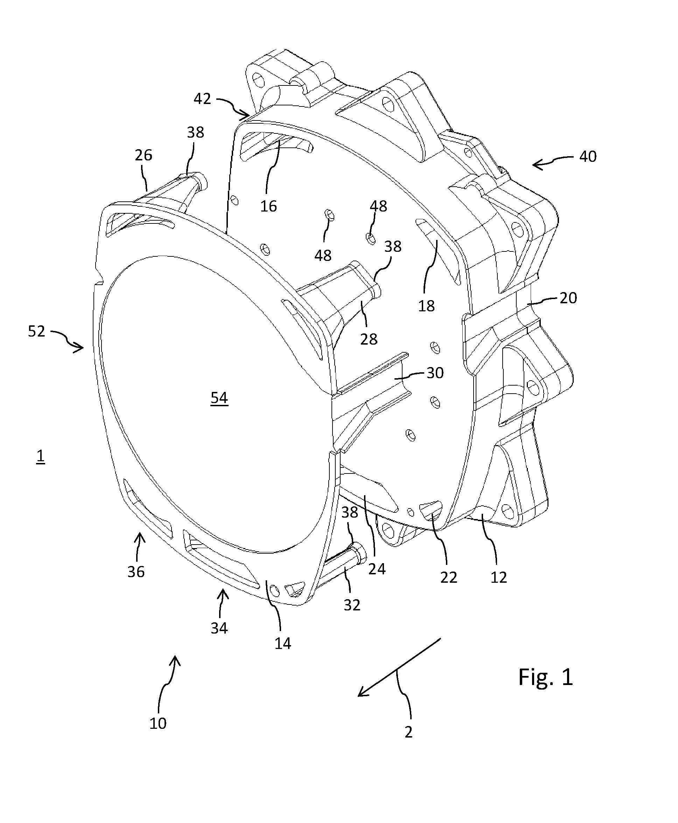

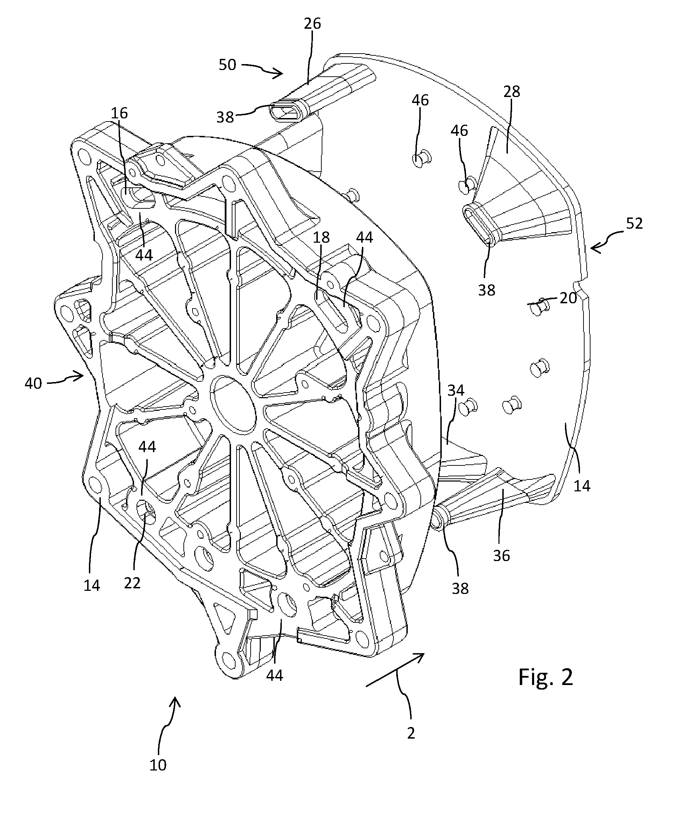

Figs. 1 and 2 show an end plate assembly 10 of a fuel cell device, wherein the position of a fuel cell is indicated with reference number 1. The end plate assembly 10 comprises a carrier structure 12 which typically provides mechanical load transmission across its substantially planar shape extending in a radial or transverse direction. Axially adjacent to the carrier structure 12, an insulating structure 14, made of an electrically insulating material is provided, which is inseparably engaged with the carrier structure 12. The carrier structure 12, typically made of a cast metal part, such like aluminum, steel or titanium or alloys thereof, provides mechanical stiffness and rigidity in order to compress the stack of fuel cells 1 in axial direction 2.

The carrier structure 12 and the insulating structure 14 are somewhat oval-shaped in transverse or radial direction perpendicular to the axial direction 2. Carrier structure 12 and insulating structure 14 comprise mutually corresponding geometries in order to smoothly engage with each other.

The insulating structure 14 comprises an injection moldable plastic or polymeric material, such like polypropylene or polyoxymethylene. In order to mutually interconnect or to bond the carrier structure 12 and the insulating structure 14 it is particularly intended to at least partially overmold the carrier structure 12 with the insulating structure 14. This way, a positive or bonded engagement of carrier structure 12 and insulating structure 14 can be substantially attained.

As illustrated in Figs. 1 and 2, the carrier structure 12 comprises various through openings 16, 18, 22, 24 that mate with correspondingly shaped hollow protrusions 26, 28, 32, 34, 36 of the carrier structure 12. Hence, the carrier structure 12 penetrates and reaches through said through openings 16, 18, 22, 24 with its hollow protrusions 26, 28, 32, 34, 36 in order to form a positive engagement between carrier structure 12 and insulating structure 14. As further depicted in Figs. 1 and 2, the hollow protrusions 26, 28, 32, 34, 36 comprise a somewhat conical shape converging towards their free end.

However, at their free end the hollow protrusions 26, 28, 32, 34, 36 comprise radially outwardly extending rims 38 that engage and abut with edge portions 44 in direct vicinity of respective through openings 16, 18, 22, 24 on the backside 40 of the carrier structure 12. By way of the radially widening rims 38, a positive and inseparable engagement of carrier structure 12 and insulating structure 14 can be attained, which is not releasable in a non-destructive way.

The insulating structure 14 further comprises a recess 54 at its front side 52 that faces towards a first fuel cell 1. This recess 54 is particularly adapted to receive and to mount a current collector plate therein. At a lateral side edge, the recess 54 merges into a laterally arranged axially extending extension 30 that corresponds and mates with a lateral recess 20 of the carrier structure 12. The extension 30 serves as an insulator for an electric conductor to electrically connect the current collector plate with an external port.

The protrusions 26, 28, 32, 34, 36 of the insulating structure 14 are hollow and comprise a closed structure in radial or lateral direction so as to provide a gas-tight and/or liquid-tight lead-through axially intersecting the corresponding through openings 16, 18, 22, 24 of the carrier structure 12. This way, reactants and reaction products can be led through the metallic carrier structure 12 without getting in direct contact therewith. Similarly, at least one of the hollow protrusions 26, 28, 32, 34, 36 may provide a guiding and lead-through structure for a coolant.

As further illustrated in Figs. 1 and 2, the front side 42 of the carrier structure 12 may comprise numerous through-holes 48 which may engage with corresponding protrusions 46 extending in axial direction and towards the carrier structure 12 on the backside 50 of the insulating structure 14.

It is particularly intended, that the carrier structure 12 serves as a molding component in an injection molding process in which the insulating structure 14 is manufactured and produced. Hence, the preconfigured carrier structure 12 has to be arranged in an injection molding tool in such a way, that it can be overmolded with the insulating structure 14 thereby establishing a positive interlock of carrier structure 12 and insulating structure 14. This way, even manufacturing tolerances of the carrier structure 12 can be easily compensated since the insulating structure 14 is inherently individually geometrically adapted to the carrier structure 12.

Moreover, by way of at least partially overmolding the carrier structure 12 with the insulating structure 14, a separate step of mutually assembling carrier structure 12 and insulating structure 14 becomes substantially obsolete. This way, geometric precision, reproducibility and effectiveness of the manufacturing process of a composite end plate assembly 10 an be substantially improved. Furthermore, by making use of an injection molded insulating structure 14 directly molded onto or at least partially around the carrier structure 12, production costs, especially when subject to a mass production process can be advantageously reduced.

### List of Reference Numerals

- 1: fuel cell
- 2: axial direction
- 10: end plate assembly
- 12: carrier structure
- 14: insulating structure
- 16: through opening
- 18: through opening
- 20: recess
- 22: through opening
- 24: through opening
- 26: protrusion
- 28: protrusion
- 30: extension
- 32: protrusion
- 34: protrusion
- 36: protrusion
- 38: rim
- 40: backside
- 42: front side
- 44: edge portion
- 46: protrusion
- 48: through-hole

- 50: backside
- 52: front side
- 54: recess

## Claims

1. An end plate assembly for a fuel cell stack, comprising:
- a carrier structure (12) to provide mechanical load transmission, and
- at least one insulating structure (14) at least partially covering a front side (42) of the carrier structure (12) to face towards at least one fuel cell (1),
wherein the insulating structure (14) and the carrier structure (12) are inseparably engaged.

2. The end plate assembly according to claim 1, wherein the insulating structure (14) and the carrier structure (12) are positively engaged.

3. The end plate assembly according to any one of the preceding claims, wherein the insulating structure (14) and the carrier structure (12) are mutually bonded.

4. The end plate assembly according to any one of the preceding claims, wherein the insulating structure (14) and the carrier structure (12) form a composite end plate.

5. The end plate assembly according to any one of the preceding claims, wherein the insulating structure (14) substantially covers the entire front side (42) of the carrier structure (12).

6. The end plate assembly according to any one of the preceding claims, wherein the insulating structure (14) comprises a recess (54) at a front side (52) facing away from the carrier structure (12) and being adapted to receive a current collector of the fuel cell stack.

7. The end plate assembly according to any one of the preceding claims, wherein the insulating structure (14) comprises at least one hollow protrusion (26, 28, 32, 34, 36) extending through a corresponding through opening (16, 18, 22, 24) of the carrier structure (12).

8. The end plate assembly according to claim 7, wherein the protrusion (26, 28, 32, 34, 36) comprises a radially widened rim (38) at its free end being in abutment with a backside (40) of the carrier structure (12).

9. The end plate assembly according to any one of the preceding claims, wherein the insulating structure (14) comprises at least one lateral extension (30) extending substantially parallel to a surface normal of the insulating structure (14) and mating with a lateral recess (20) of the carrier structure (12).

10. The end plate assembly according to any one of the preceding claims, wherein the insulating structure (14) comprises an injection moldable plastic material.

11. The end plate assembly according to any one of the preceding claims, wherein the carrier structure (12) comprises a cast metal part.

12. The end plate assembly according to any one of the preceding claims, wherein the carrier structure (12) serves to provide a component of an injection molding tool.

13. The end plate assembly according to any one of the preceding claims, wherein the carrier structure (12) is at least partially overmolded by the insulating structure (14) at its front side (42) and/or at its backside (40).

14. A fuel cell assembly comprising at least one fuel cell (1) and at least one end plate assembly according to any one of the preceding claims.

15. A method of manufacturing an end plate assembly according to any one of the preceding claims 1 to 13, wherein a carrier structure (12) is at least partially overmolded by an injection moldable material to form an insulating structure (14) inseparably engaged with the carrier structure (12).
